# EUROPÄISCHE PATENTSCHRIFT

(11) **EP 1 040 344 B1**
(45) Veröffentlichungstag und Bekanntmachung des Hinweises auf die Patenterteilung: **31.10.2001**
(21) Anmeldenummer: 98965779.6
(22) Anmeldetag: 07.12.1998
(51) Int. Cl.: G01N 27/26

(54) **MIKRO-SPALTZELLE**
MICRO-SLIT CELL
CELLULE A MICROFENTE

(30) Priorität: 11.12.1997 DE 19755183
(43) Veröffentlichungstag der Anmeldung: 04.10.2000
(73) Patentinhaber: Institut für Polymerforschung Dresden e.V., 01069 Dresden (DE)
(72) Erfinder: JACOBASCH, Hans-Jörg DI, Verstorben (DE); WERNER, Carsten, D-01069 Dresden (DE); KÖRBER, Heinz, D-01324 Dresden (DE)
(74) Vertreter: Rauschenbach, Marion, Dipl.-Ing.
(86) Internationale Anmeldenummer: EP9807943
(87) Internationale Veröffentlichungsnummer: WO9930141

(56) Entgegenhaltungen:
- DD-A- 222 692
- DE-A- 4 345 152
- US-A- 4 175 233
- PATENT ABSTRACTS OF JAPAN vol. 016, no. 237 (P-1362), 29. Mai 1992 & JP 04 050758 A (EBARA INFILCO), 19. Februar 1992
- PATENT ABSTRACTS OF JAPAN vol. 005, no. 202 (P-095), 22. Dezember 1981 & JP 56 125653 A (KUREHA CHEM IND), 2. Oktober 1981

## Beschreibung

### Technisches Gebiet

Die Erfindung betrifft das Gebiet der physikalischen Chemie und des Gerätebaus und bezieht sich auf eine Mikro-Spaltzelle, wie sie z.B. bei der Ermittlung des Zeta-Potentials und des Schichtdickenwachstums zur Anwendung kommen kann.

### Stand der Technik

Bisher sind Meßzellen bekannt, mit deren Hilfe das Zeta-Potential von z.B. Folien oder planparallelen Platten ermittelt werden kann (DD 2 13 513 ; DD 222 692).
Für kleinflächige Proben sind ebenfalls Meßzellen zur Bestimmung des Zeta-Potentials bekannt (DE 43 45 152 A1 oder DE 38 40 901 A1).
Weiterhin ist nach US-A-4,175,233 eine Vorrichtung zur Messung des Strömungspotentials bekannt Mit dieser Vorrichtung ist es auch möglich, eine direkte Analyse der Oberfläche in der Vorrichtung durchzuführen.

Diese bekannten Meßzellen haben jedoch den Nachteil, daß nur das Strömungspotential bzw. der Strömungsstrom gemessen werden und bei bekannter Druckdifferenz in bekannter Weise das Zeta-Potential berechnet werden kann.

### Darstellung der Erfindung

Der Erfindung liegt die Aufgabe zugrunde, eine Mikro-Spaltzelle anzugeben, mit deren Hilfe es möglich wird, neben der Ermittlung des Zeta-Potentials an ebenen Flächen gleichzeitig mindestens einen weiteren Effekt meßtechnisch zu erfassen.

Die Aufgabe wird durch die im Anspruch 1 angegebene Erfindung gelöst. Weiterbildungen sind Gegenstand der Unteransprüche.

Bei der erfindungsgemäßen Mikro-Spaltzelle werden als Probenträger zwei planparallele Platten verwendet, wobei auf der Oberfläche beider planparalleler Platten das zu untersuchende Material in dünner Schicht aufgetragen ist. Beide

Platten können beispielsweise von je einer justierbaren Fassung gehalten werden, wobei eine Fassung fest mit einem Gestell verbunden sein kann und die andere Fassung über eine Linearführung mit dem Gestell verbunden ist. Der Meßspalt zwischen den Platten kann mit Hilfe einer Differentialmikrometerschraube, die beispielsweise fest mit dem Gestell verbunden ist, in sehr kleinen Schritten, beispielsweise in Schritten im Mikrometerbereich, eingestellt werden. Der Meßspalt wird durch zwei Dichtleisten abgedichtet. Die Dichtleisten können von beispielsweise je einem Pneumatikbalg, die alle mit dem gleichen Druck beaufschlagt werden, an den Meßspalt angedrückt werden. Die Meßflüssigkeit wird durch je ein Metallröhrchen in den Raum zwischen den Dichtleisten und den planparallelen Platten zu- bzw. abgeführt. Über dem Meßspalt wird auf die Meßflüssigkeit eine Druckdifferenz aufgeprägt, so daß eine Strömung im Meßspalt entsteht. Das Strömungspotential wird an den Metallröhrchen, die gleichzeitig als Elektroden dienen können, abgegriffen und in bekannter Weise das Zeta-Potential berechnet.
Weiterhin ist an der Ausströmseite ein Durchflußmeßgerät angeordnet, mit welchem die durch den Meßspalt fließende Menge an Meßflüssigkeit gemessen werden kann. Ebenfalls kann die Meßspaltweite über ein Mikroskop sichtbar gemacht werden und meßbar sein.

Durch die erfindungsgemäße Vorrichtung ist es möglich, neben der Ermittlung des Zeta-Potentials gleichzeitig noch mindestens einen anderen Effekt meßtechnisch zu erfassen.
Dies kann beispielsweise die Ermittlung des Schichtdickenwachstums an der Oberfläche der Proben sein.
Dazu wird an der Ausströmseite mit dem Durchflußmeßgerät die durch den Meßspalt fließende Menge an Meßflüssigkeit gemessen. Der Meßspalt wird mit Hilfe der Differentialmikrometerschraube auf eine Weite, vorteilhafterweise zwischen 1 um und 50 µm, eingestellt, die es erlaubt, daß erwartete Schichtdickenwachstum der Probe durch eine entsprechende Änderung des Durchflusses meßtechnisch zu erfassen.
Weiterhin kann beispielsweise gleichzeitig die spezifische elektrische Leitfähigkeit der Probenoberfläche oder einer Adsorptionsschicht meßtechnisch erfaßt werden.

Auch ist gleichzeitig die Erfassung des Auftretens elektroviskoser Effekte in engen Strömungskanälen und die Erfassung des Adsorptionsprozesses unter definierten Transportbedingungen möglich.
Es ist ebenfalls möglich gleichzeitig den Einfluß der Oberflächenleitfähigkeit der Probe im Verhältnis zur Gesamtleitfähigkeit des Meßspaltvolumens zu ermitteln.

### Bester Weg zur Ausführung der Erfindung

Die Erfindung wird im folgenden an einem Ausführungsbeispiel näher erläutert

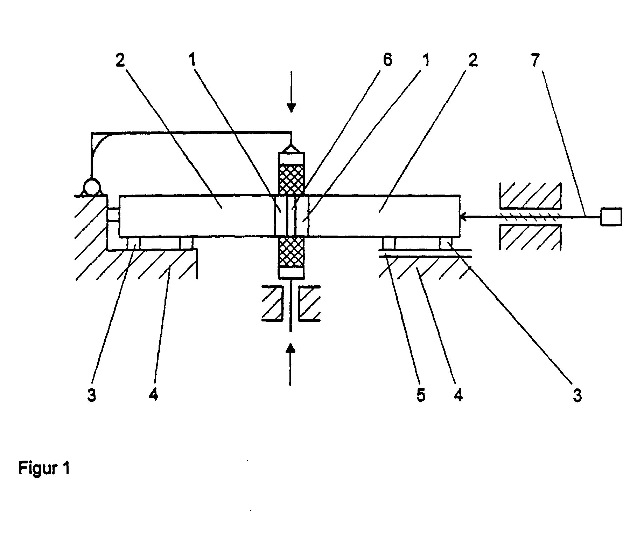

Dabei zeigt
Fig. 1 einen Schnitt durch die erfindungsgemäße Mikro-Spaltzelle, bei dem der Meßspalt 6 quer geschnitten ist, und

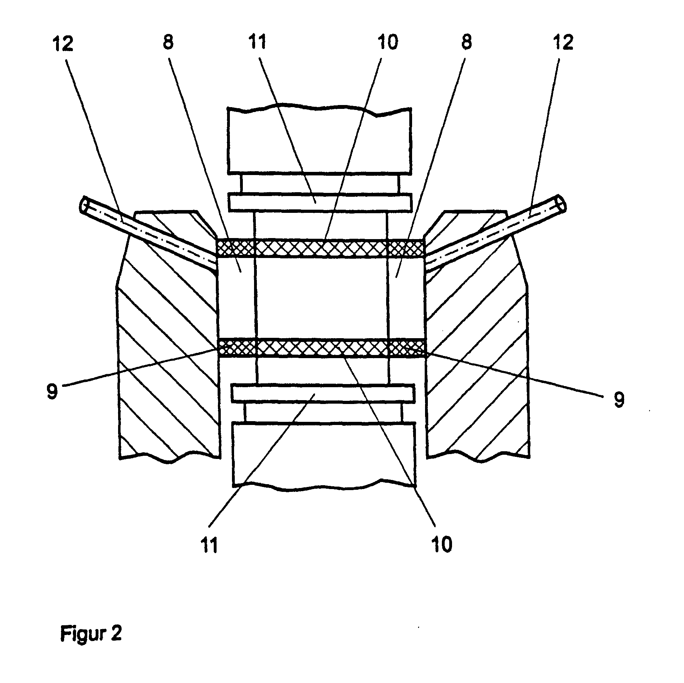

Fig. 2 einen Schnitt durch die erfindungsgemäße Mikro-Spaltzelle, bei dem in der Ebene des Meßspaltes 6 geschnitten ist.

### Beispiel

Auf die Oberflächen von zwei planparallelen Platten 1 wird ein dünner Polymerfilm aus Polystyren mit einer Schichtdicke vom ca. 100 nm durch ein Spin-Coating-Verfahren aufgebracht. Zwischen den Proben wird durch eine Differenzialmikrometerschraube 7 ein Meßspalt 6 mit einer Spaltweite von 1µm eingestellt.
Auf den Probenträger wird ein hydrophober Fluorpolymerfilm in einer Schichtdicke von ca. 80 nm aufgebracht. Als Meßlösung wird eine Phosphatpufferlösung verwendet. Es werden bei variiertem Plattenabstand Strömungspotential und Strömungsstrom bei Druckdifferenzen zwischen 1 und 50 kPa bestimmt. Das Zeta-Potential wird aus Stömungsstrom- und Strömungspotentialmessungen über bekannte Gleichungen ermittelt. Aus der Variation des Strömungspotentials mit dem Plattenabstand bei Werten kleiner 30 µm wir die spezifische elektrische Leitfähigkeit der Polymeroberfläche bestimmt.
Dann wird der strömenden Pufferlösung ein globuläres Plasmaprotein (Fibrinogen) in einer niedrigen Konzentration von ca. 1 µg/ml zugesetzt. Bei einem Plattenabstand von weniger als 3 µm kann dann aus den Meßwerten der erfindungsgemäßen Vorrichtung der Adsorptionsprozeß des Proteins an die Polymeroberfläche in situ durch Änderung verschiedener Grenzschichteigenschaften charakterisiert werden. Die entsprechenden Parameter sind das Zeta-Potential, die spezifische Grenzschichtleitfähigkeit der Adsorptionsschicht und die hydrodynamische Schichtdicke der Adsorptionsschicht des Proteins. Die hydrodynamische Schichtdicke wird aus der Änderung des Volumenstromes der Meßlösung bei konstanter Druckdifferenz bestimmt. Durch die Adsorption des Proteins an der Polymergrenzfläche wird in diesem Fall das Zeta-Potential verringert, die spezifische Grenzschichtleitfähigkeit wird signifikant erhöht und die Schichtdicke der Adsorptionsschicht wächst auf ca. 50 nm.

### Bezugszeichenliste

- 1: planparallele Platten
- 2: Plattenträger
- 3: Justiereinrichtung
- 4: Gestell
- 5: Linearführung
- 6: Meßspalt
- 7: Differentialmikrometerschraube
- 8: Kammern
- 9: Dichtung
- 10: Dichtleiste
- 11: Pneumatikbalg
- 12: Meßflüssigkeitszu- und - abführung

## Patentansprüche

1. Mikro-Spaltzelle zur Ermittlung des Zeta-Potentials und gleichzeitiger Bestimmung mindestens eines weiteren Effektes an einer Probe, die aufgebaut ist aus zwei planparallelen Platten (1), die als Probenträger dienen, und wobei mindestens eine der Platten (1) gelagert ist, wodurch der Abstand zwischen den Oberflächen der beiden Platten (1) in sehr kleinen Schritten veränderlich ist, aus je einer Zu- und Ableitung für die Meßflüssigkeit (12), aus einer Vorrichtung zur Veränderung des Abstandes (3,4,5,7) zwischen den Oberflächen der beiden planparallelen Platten (1) in sehr kleinen Schritten, aus zwei Elektroden, die von der Meßflüssigkeit benetzt sind und in Strömungsrichtung vor und hinter den planparallelen Platten (1) angeordnet sind, **dadurch gekennzeichnet, dass** die Mikro-Spaltzelle weiterhin aufgebaut ist aus mindestens zwei Dichtleisten (10), die den Raum zwischen den planparallelen Platten (1) abdichten, aus einem Durchflußmeßgerät an der Ausströmseite des Raumes (8) zwischen den planparallelen Platten (1), und weiterhin der Abstand zwischen den Oberflächen der beiden planparallelen Platten (1) in sehr kleinen Schritten beobachtbar veränderlich ist, und die Zu- und Ableitung für die Meßflüssigkeit (12) in den Raum (8) reichen, der zwischen den Dichtleisten(10) und den planparallelen Platten (1) vorhanden ist.

2. Mikro-Spaltzelle nach Anspruch 1, bei der die planparallelen Platten (1) aus einem Glas bestehen.

3. Mikro-Spaltzelle nach Anspruch 1, bei der ein Teil der Vorrichtung zur Veränderung des Abstandes (3,4,5,7) zwischen den mit den Proben behafteten Oberflächen der beiden planparallelen Platten (1) eine Differenzialmikrometerschraube (7) ist.

4. Mikro-Spaltzelle nach Anspruch 1, bei der die Dichtleisten (10) aus einem Elastomer bestehen.

5. Mikro-Spaltzelle nach Anspruch 1, bei der die Zu- und Ableitung für die Meßflüssigkeit (12), die in den Raum (8) reichen, der zwischen den Dichtleisten (10) und den planparallelen Platten (1) vorhanden ist gleichzeitig je eine Elektrode beinhalten.

6. Mikro-Spaltzelle nach Anspruch 1, bei der die Zu- und Ableitung für die Meßflüssigkeit (12) aus je einem Metallröhrchen bestehen, die gleichzeitig als Elektrode dienen.

7. Mikro-Spaltzelle nach Anspruch 1, bei der eine Präzisionsgeradführung (5) vorhanden ist, durch die der Abstand zwischen den mit den Proben behafteten Oberflächen der planparallelen Platten (1) verändert wird.

8. Mikro-Spaltzelle nach Anspruch 1, bei der ein Mikroskop vorhanden ist, durch die die Meßspaltweite sichtbar gemacht und meßbar ist.

## Claims

1. Micro slit cell for ascertaining the zeta potential and at the same time determining at least one further effect on a sample, which is constructed from two plane-parallel plates (1), which act as sample holders, at least one of the plates (1) being supported, due to which the distance between the surfaces of the two plates (1) can be changed in very small increments, from a supply line and a removal line respectively for the measuring liquid (12), from a device for changing the distance (3, 4, 5, 7) between the surfaces of the two plane-parallel plates (1) in very small increments, from two electrodes, which are moistened by the measuring liquid and are arranged in the direction of flow in front of and behind the plane-parallel plates (1), **characterized in that** the micro slit cell is constructed furthermore from at least two sealing strips (10), which seal the space between the plane-parallel plates (1), from a flowmeter on the discharge side of the space (8) between the plane-parallel plates (1), and furthermore the distance between the surfaces of the two plane-parallel plates (1) can be changed observably in very small increments, and the supply line and removal line for the measuring liquid (12) reach into the space (8) available between the sealing strips (10) and the plane-parallel plates (1).

2. Micro slit cell according to claim 1, in which the plane-parallel plates (1) consist of glass.

3. Micro slit cell according to claim 1, in which a part of the device for changing the distance (3, 4, 5, 7) between the surfaces of the two plane-parallel plates (1) covered with samples is a differential micrometer screw (7).

4. Micro slit cell according to claim 1, in which the sealing strips (10) consist of an elastomer.

5. Micro slit cell according to claim 1, in which the supply line and removal line for the measuring liquid (12), which reach into the space (8) available between the sealing strips (19) and the plane-parallel plates (1), each contain an electrode at the same time.

6. Micro slit cell according to claim 1, in which the supply line and removal line for the measuring liquid (12) each consist of a metal tube, which tubes serve at the same time as an electrode.

7. Micro slit cell according to claim 1, in which a precision gratuated guide (5) is present, by means of which the distance between the surfaces of the plane-parallel plates (1) covered with samples is changed.

8. Micro slit cell according to claim 1, in which a microscope is present, by means of which the measuring slit width is made visible and measurable.

## Revendications

1. Microcellule à fente pour déterminer le potentiel Zêta et définir en même temps au moins un autre effet sur un échantillon, comprenant :
- deux plaques planes parallèles (1), servant de support à l'échantillon, au moins une des plaques (1) étant fixe et la distance entre les faces en regard des deux plaques (1) pouvant varier à très petits pas,
- une conduite d'entrée et une conduite de sortie du liquide de mesure (12),
- un dispositif faisant varier à très petits pas la distance (3, 4, 5, 7) entre les faces des deux plaques planes parallèles (1),
- deux électrodes mouillées par le liquide de mesure et montées devant et derrière les plaques (1), dans le sens d'écoulement,
**caractérisée en ce que**
- le microcellule à fente comporte en outre au moins deux baguettes d'étanchéité (10) rendant étanche le volume compris entre les plaques (1), ainsi qu'un appareil de mesure de flux liquide situé sur le côté de sortie du volume (8) entre les plaques (1), et
- en plus la variation à très petits pas de la distance entre les faces des deux plaques planes parallèles (1) peut être observée, et les conduites d'entrée et de sortie du liquide de mesure (12) débouchent dans le volume (8) compris entre les baguettes d'étanchéité (10) et les plaques planes parallèles (1).

2. Microcellule à fente selon la revendication 1,
**caractérisée en ce que**
les plaques planes parallèles (1) sont en verre.

3. Microcellule à fente selon la revendication 1,
**caractérisée en ce qu'**
une partie du dispositif faisant varier la distance (3, 4, 5, 7) entre les faces, garnies des échantillons, des deux plaques (1) est une vis micrométrique différentielle (7).

4. Microcellule à fente selon la revendication 1,
**caractérisée en ce que**
les barrettes d'étanchéité (10) sont en élastomère.

5. Microcellule à fente selon la revendication 1,
**caractérisée en ce que**
les conduites d'entrée et de sortie de liquide de mesure (12), qui débouchent dans le volume (8) compris entre les barrettes d'étanchéité (10) et les plaques (1), contiennent chacune une électrode.

6. Microcellule à fente selon la revendication 1,
**caractérisée en ce que**
les conduites d'entrée et de sortie de liquide à mesurer (12) sont constituées chacune d'un petit tube métallique servant également d'électrode.

7. Microcellule à fente selon la revendication 1,
**caractérisée en ce qu'**
un guidage gradué de précision (5) permet de faire varier la distance entre les faces des plaques planes parallèles (1) sur lesquelles adhèrent les échantillons.

8. Microcellule à fente selon la revendication 1,
**caractérisée en ce qu'**
un microscope permet d'observer et de mesurer la largeur de la fente de mesure.
